# EUROPEAN PATENT SPECIFICATION

(11) **EP 2 220 416 B1**
(45) Date of publication and mention of the grant of the patent: **11.03.2020**
(21) Application number: 08806725.1
(22) Date of filing: 06.10.2008
(51) Int. Cl.: F16L 35/00, F16L 55/115, F16J 13/24

(54) **CAP FOR A FLUID COUPLING MEMBER**
KAPPE FÜR EIN FLUIDVERBINDUNGSGLIED
COUVERCLE D'UN ÉLÉMENT DE COUPLAGE FLUIDE

(30) Priority: 08.10.2007 GB 0719600
(43) Date of publication of application: 25.08.2010
(73) Proprietor: FORT VALE ENGINEERING LIMITED, Nelson, Lancashire BB9 0SG (GB)
(72) Inventor: BAILEY, David, Burnley, Lancashire BB10 2BW (GB)
(74) Representative: Manley, Nicholas Michael
(86) International application number: PCT/GB2008/050909
(87) International publication number: WO 2009/047554

(56) References cited:
- US-A- 4 237 936
- US-A- 5 640 999
- US-B2- 6 851 452

## Description

The present invention relates to caps for self-sealing couplings.

A self-sealing coupling comprises two releasably interconnectable fittings, each having a valve which, when the fittings are coupled together, automatically open to allow the flow of fluid and which, when the fittings are uncoupled, automatically close to prevent unwanted release of fluid.

When the fittings of the coupling are disconnected, it is desirable to secure a protective cap over the fitting in order to prevent damage to the fitting, to keep the fitting free of contamination and to prevent inadvertent opening of the valve on the fitting, to seal the coupling against pressure in the event of the fitting leaking. The simplest way of achieving this is by means of a screw-threaded cap which is screwed onto a complementarily-threaded sleeve on the fitting. However, the screw threads on the cap and on the fitting are prone to damage and, in addition, connecting and disconnecting the cap is relatively time-consuming, which increases the likelihood that the cap will be left off.

Quick-fit and quick-release caps are known, but the problem with such caps is that if fluid pressure has built up behind the cap, release of the securing mechanism of the cap can result in the cap being projected at high speed towards an operator, with potentially harmful consequences. Other caps are only dust caps and are not pressure retaining. Other quick-release couplings have been devised which release excess pressure behind the cap before it can be removed, but such arrangements are relatively complex, requiring valves, springs, levers and the like, resulting in increased cost and an increased likelihood of failure.

Reference is made to US-A-4 237 936, which discloses a pig trap closure which includes a collar adapted to be attached to the end of a pipe, a door for opening and closing the end of the pipe, means for clamping the door to the collar and sealing means for preventing communication between the interior of the pipe and the atmosphere when the door is clamped to the collar. A testing valve is provided for indicating the presence of pressurised fluid in the pipe and means connects the testing valve to a handle used to unclamp the door for preventing movement of the handle until after the presence of pressurised fluid within the pipe has been checked by the testing valve.

In accordance with the present invention, there is provided a cap for a fluid coupling member, the cap being configured to be releasably slidably engageable with the fluid coupling member and comprising a body portion, engagement means releasably slidably engageable with a portion of the coupling member which, when engaged, prevents the body portion from sliding with respect to the coupling member in a first direction and valve means displaceable between a first, retracted position in which it is not engaged with the coupling member and permits engagement of the engagement means with the coupling and a second, extended position in which the valve means is in sealing engagement with the coupling member and prevents disengagement of the engagement means, wherein the valve means is located within the body portion of the cap when in the retracted position.

By engaging the engagement means with the fluid coupling member, the cap and the fluid coupling member are prevented from relative displacement in a first direction. If the valve means is then engaged with the coupling member, it then becomes impossible for the cap to be removed until the valve means is opened. If any pressure has built up behind the valve means while closed, opening of the valve - which is required before the cap can be removed - will release any such pressure, while the cap and coupling member are still firmly engaged, thereby preventing the excess pressure from propelling the cap away from the coupling member.

Preferably, disengagement of the engagement means is effected by sliding the cap in a first direction and wherein the said engagement of the valve means prevents the cap from sliding in the said first direction.

Preferably, the direction in which the cap is slidable to engage and/or disengage the engagement means is inclined to the direction in which the valve means is moveable and preferably the direction in which the cap is slidable to engage and/or disengage the engagement means is substantially perpendicular to the direction in which the valve means is movable.

In a preferred embodiment, the cap is slidable laterally with respect to the direction of flow of the fluid coupling member in order to engage and/or disengage the engagement means.

Preferably, the valve means is displaceable in the direction of fluid flow through the fluid coupling member.

Preferably, the cap releasably fits over, and engages, an end portion of the fluid coupling, and engagement of the engagement means prevents the cap from moving in the axial direction of the fluid coupling.

In one embodiment, the engagement means comprises an overhanging projection adapted to be located over a corresponding portion of the coupling member to be covered.

The overhanging projection preferably extends partly around the periphery of the body portion.

Preferably, the overhanging projection projects from the inner face of the body portion.

In a preferred embodiment, the overhanging projection comprises an arcuate lip.

Preferably, the overhanging projection defines slot means adapted to receive a projecting portion of the fluid coupling member.

Preferably, the cap further comprises means for preventing rotation of the cap with respect to the fluid coupling member when the engagement means is engaged with the fluid coupling member.

For example, the cap may have a projection or recess adapted to be received in a recess or projection respectively of a fluid coupling member.

The cap is preferably manually engageable and disengageable with the fluid coupling member.

Preferably, the valve means is an interference fit with the coupling member when in the second, extended position.

In one embodiment, the valve means comprises a valve closure member releasably engageable with the fluid coupling member and wherein the body portion comprises a recess in which the valve closure member is received when in the first retracted position.

The valve closure member preferably comprises a resiliently deformable seal means.

In one embodiment, the resiliently deformable seal means is located around the periphery of the valve closure member and is adapted to be engageable with a cylindrical valve seat on the fluid coupling member.

Preferably the valve closure member on which the resiliently deformable seal means is carried is adapted to be engageable with a second valve seat on the fluid coupling member when the resiliently deformable seal means is in sealing engagement with the fluid coupling member.

Preferably, the cap further comprises an elongate mounting member on which the valve closure member is mounted.

The elongate mounting member may be displaceable longitudinally and may pass through an aperture in the body portion.

In one embodiment, the elongate mounting member is pivotally connected to a displacement member, whereby movement of the displacement member causes displacement of the elongate mounting member and the valve closure member.

Preferably, the displacement member is screw-threadedly mounted on the body portion of the cap.

The present invention also includes the combination of a fluid coupling member and a cap in accordance with the present invention, wherein the fluid coupling member comprises engagement means which are releasably engageable with the engagement means of the cap and a recess for receipt of the valve means in its second, extended position.

By way of example only, a specific embodiment of the present invention will now be described with reference to the accompanying drawings, in which:
Fig. 1 is a perspective view of a self-sealing coupling component and a cap in accordance with the present invention;
Figs. 2a and 2b are perspective views from above and below respectively of the sealing cap of Fig. 1;
Fig. 3 is a rear view of the cap of Fig. 1;
Figs. 4a and 4b are cross-sectional views through the cap of Fig. 1 in the direction of arrows IV-IV in Fig. 3, with the valve member of the cap shown in extended and retracted positions respectively;
Figs. 5a, 5b and 5c are cross-sectional views through the coupling and cap of Fig. 1, showing the sequence in which the cap is fitted; and
Fig. 6 is a cross-sectional view of the coupling and cap of Fig. 1 when assembled, looking in the direction of arrows VI-VI in Fig. 1.

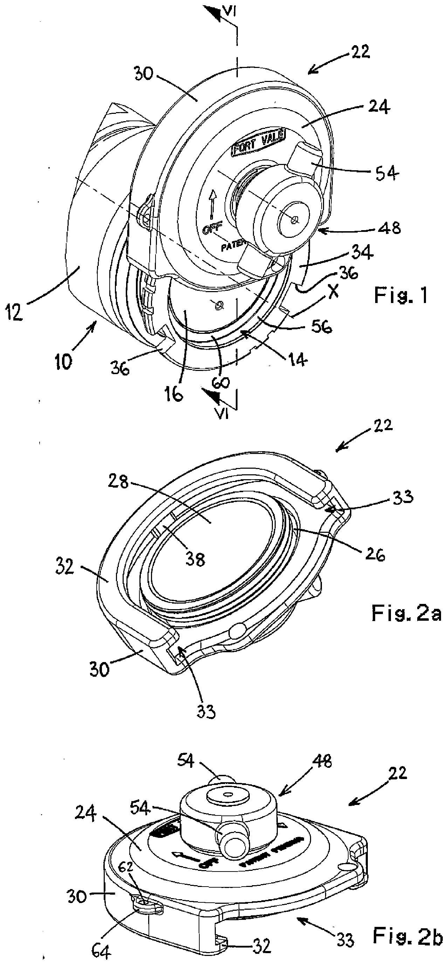

Fig. 1 shows the female coupling (hereinafter "fitting") 10 of a self-sealing fluid coupling. The fitting 10 is generally conventional and comprises a generally cylindrical stainless steel housing 12 having a longitudinally extending flow axis X and an open end 14 which can be selectively closed off by means of a spring-biased poppet valve 16 which is sealingly engageable with a cylindrical valve seat 18.

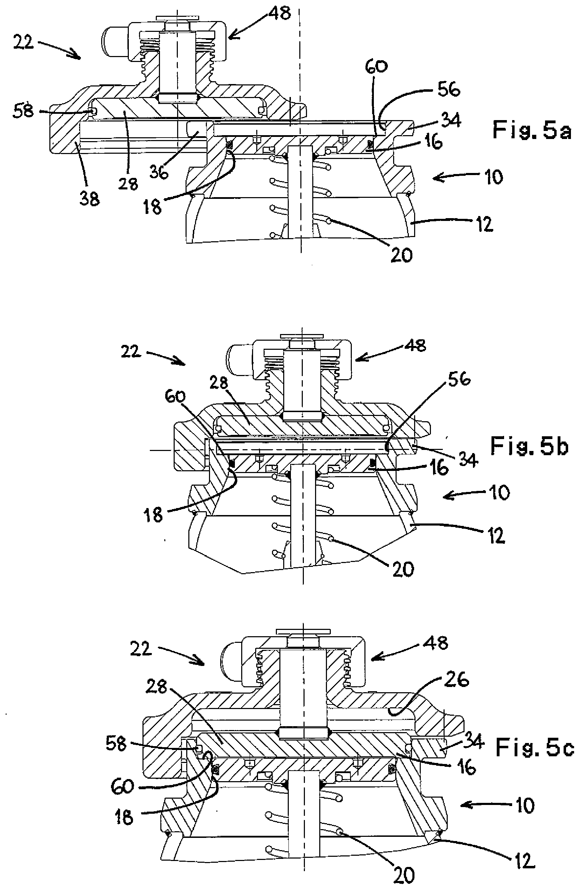

As best seen in Fig. 5, the poppet valve 16 is biased outwardly by means of a spring 20. As the end of the other, male, component of the coupling is inserted into the fitting 10, it displaces the valve poppet 16 away from its seat 18 against the force of spring 20 and allows fluid to pass through the housing of fitting 10 into the other component of the coupling. Conversely, when the other, male, component of the coupling is removed from the fitting 10, the spring 20 automatically biases the valve poppet valve 16 back into engagement with the valve seat 18, thereby preventing further flow of fluid through the fitting 10.

In order to protect the fitting 10 when not in use, a stainless steel cap 22 is releasably manually securable over the end of the fitting. The cap has a generally circular disc-shaped main body portion 24 whose undersurface is formed into a circular recess 26 for receipt of a movable poppet valve 28, which will be described in more detail hereinafter.

An enlarged peripheral rim 30 is also provided on the rear face of the cap. The peripheral rim extends in the longitudinal direction of the cap and extends for approximately 240° around the periphery of the cap. It will also be noted that an overhanging lip portion 32, forming a releasably engagement with the fitting, projects radially inwardly from the distal end of the rim 30. The overhanging lip portion 32 extends approximately 220° round the periphery of the cap. The distance between the radially innermost portions of the diametrically opposed portions of the longitudinal extension of the cap correspond to the maximum diameter of a peripheral securing flange 34 extending radially outwardly from the end of the fitting 10 and thereby forms a slot 33 by means of which the cap can be slid over the securing flange 34 of the fitting.

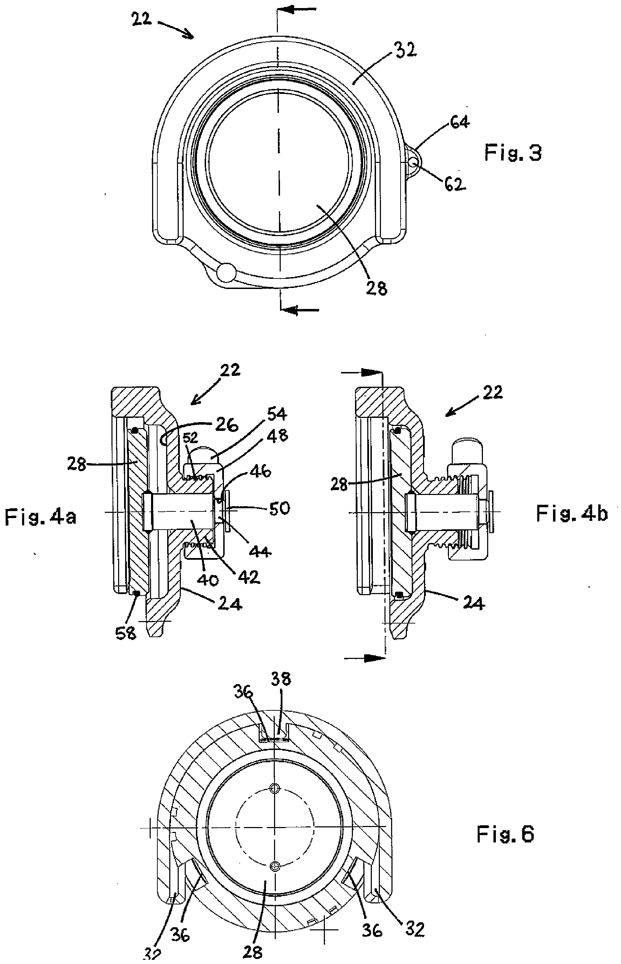

The peripheral securing flange 34 of the fitting 10 is provided with three recesses 36 equally angularly spaced around the periphery of the flange 34, each of which is adapted to receive a complementarily-shaped lug portion 38 projecting radially inwardly from the central portion of the longitudinally extending rim 30 of the cap (Figs. 2a and 6).

The poppet valve 28 of the cap is displaceable in a longitudinal direction with respect to the cap axis. The poppet valve is disc-shaped and is secured to a cylindrical boss 40 which projects from the centre of the rear face of the poppet valve 28 through a complementarily-shaped tubular boss 42 on the cap, through which it is slidably disposed. A reduced diameter portion 44 of the boss 42 passes through an aperture 46 in a displacement cap 48 on the exterior of the main cap and is held in place, but is rotatable with respect to the cap 48, by means of a securing bolt 50 having an enlarged head. The displacement cap 48 is internally threaded and threadedly engages corresponding threads 52 on the exterior of the tubular boss 42. By rotating the displacement cap 48, which can be facilitated by means of two oppositely-disposed radially extending lugs 54, the displacement cap 48 can be displaced longitudinally with respect to the cap, whereby the poppet valve can be moved between a first, retracted position shown in Fig 4b in which the poppet valve 28 is withdrawn into the central circular recess 26, and a displaced position shown in Fig. 4a in which the valve closure member sealingly engages an annular valve seat 56 formed by a cylindrical inner face of the fitting 10. An O-ring seal 58 is provided on the poppet valve to ensure fluid-tight contact with the valve seat. However, when the valve poppet is in its fully displaced position, the periphery of its front face also engages a secondary annular valve seat 60 on the socket. This provides an additional, metal-to-metal seal between the valve poppet and the fitting 10, which provides additional protection in the event of failure of the O-ring seal 58. In its fully displaced position, the valve closure member is therefore in an interference fit with the fitting 10.

In use, in order to fit the cap 22 to the fitting 10, the poppet valve of the cap is displaced to its withdrawn position as shown in Fig. 4b. This allows the cap to be positioned over the end of the fitting 10 by sliding the cap such that its overhanging lip portion 32 engages over and behind the peripheral securing flange 34 on the fitting 10. In order to do so, it is necessary to align the radially inwardly projecting lug 38 on the cap with one of the recesses 36 in the periphery of the securing flange 34 on the fitting, which thereby prevents the cap from rotating with respect to the fitting. As shown in Fig. 5c, the valve poppet 28 of the cap is then displaced downwardly parallel to the direction of fluid flow through the fitting 10 by rotating the displacement cap 48, into its other extreme position, into sealing engagement with the cylindrical valve seat 56 and the annular valve seat 60.

In this position, the cap 22 is prevented from being displaced radially by engagement of the valve poppet 28 of the cap with the fitting 10. In addition, the cap 22 is prevented from axial, longitudinal displacement in the direction of fluid flow through the fitting by engagement of the overhanging lip portion 32 over and behind the peripheral securing flange 34 of the fitting. The cap 22 is thereby securely held against inadvertent disengagement. It may be locked in position by passing the hasp of a padlock through an aperture 62 in a radially-projecting lug 64 on the cap and a corresponding aperture in a lug (not shown) projecting from the periphery of the flange of the fitting.

If the fitting 10 is defective, fluid pressure will build up behind the valve poppet of the cap 22. While the cap is held in its closed position, the fluid pressure will be safely retained.

If it is desired to remove the cap, it is first of all necessary to displace the valve poppet 28 to its withdrawn position before it can be slid off the fitting. However, displacement of the valve poppet from its extreme position in which it is sealingly engaged with the cylindrical valve seat 56 and the annular valve seat 60 allows any excess fluid pressure to be discharged, whilst ensuring that the cap is held safely on the fitting, since the cap 22 is prevented from being removed until the valve poppet 28 is at, or very close to, its extreme withdrawn position. A relatively large degree of longitudinal displacement of the valve closure member is required in order to allow the cap to be slid off the fitting, and even a small displacement of the valve closure member away from the annular valve seat will be sufficient to relieve any excess pressure which has built up in the meantime.

The invention is not restricted to the details of foregoing embodiment. For example, although the embodiment shows a projecting lug 38 on the cap engageable with one of several recesses 36 on the fitting, the cap may instead have a recess engageable with one or more projections or lugs on the fitting, in order to prevent rotation of the cap with respect to the fitting.

Moreover, the fitting and cap may be made from materials other than stainless steel, such as aluminium. Furthermore, although the displacement cap 48 has been described as being screw-threadedly mounted, other connections may be used, such as an over-centre toggle.

## Claims

1. A cap (22) for a fluid coupling member (10), the cap being configured to be releasably slidably engageable with the fluid coupling member and comprising a body portion (24), engagement means (30, 32) releasably slidably engageable with a portion (34) of the coupling member which, when engaged, prevent the body portion (24) from sliding with respect to the coupling member in a first direction and valve means (28) displaceable between a first, retracted position in which it is not engaged with the coupling member and permits engagement of the engagement means with the coupling member and a second, extended position in which the valve means is in sealing engagement with the coupling member and prevents disengagement of the engagement means, wherein the valve means (28) is located within the body portion (24) of the cap when in the retracted position.

2. A cap (22) as claimed in claim 1, wherein disengagement of the engagement means (30, 32) is effected by sliding the cap in a first direction and wherein the said engagement of the valve means (28) prevents the cap from sliding in the said first direction
and, optionally, wherein the direction in which the cap (22) is slidable to engage and/or disengage the engagement means is inclined to the direction in which the valve means (28) is moveable
and, optionally, wherein the direction in which the cap (22) is slidable to engage and disengage the engagement means is substantially perpendicular to the direction in which the valve means (28) is moveable.

3. A cap (22) as claimed in any of the preceding claims, wherein the cap is slidable laterally with respect to the direction of flow of the fluid coupling member (10) in order to engage and disengage the engagement means (30, 32).

4. A cap (22) as claimed in any of the preceding claims, wherein the valve means (28) is displaceable in the direction of fluid flow through the fluid coupling member.

5. A cap (22) as claimed in any of the preceding claims, wherein the cap releasably fits over, and engages, an end portion of the fluid coupling (10) and wherein engagement of the engagement means (30, 32) prevents the cap from moving in the axial direction of the fluid coupling.

6. A cap (22) as claimed in any of the preceding claims, wherein the engagement means (30, 32) comprises an overhanging projection (32) adapted to be located over a corresponding portion of the coupling member to be covered and, optionally, wherein the overhanging projection (32) extends partly around the periphery of the body portion (24)
and, optionally, wherein the overhanging projection (32) projects from the inner face of the body portion (24).

7. A cap (22) as claimed in claim 6, wherein the overhanging projection (32) comprises an arcuate lip.

8. A cap (22) as claimed in any of the preceding claims 6 or 7, wherein the overhanging projection (32) defines slot means (33) adapted to receive a projecting portion (34) of the fluid coupling member.

9. A cap (22) as claimed in any of the preceding claims, further comprising means (36, 38) for preventing rotation of the cap (22) with respect to the fluid coupling member (10) when the engagement means is engaged with the fluid coupling member
and, optionally, comprising a projection or recess (38) adapted to be received in a recess or projection (36) respectively of a fluid coupling member.

10. A cap (22) as claimed in any of the preceding claims, wherein the cap is manually engageable and disengageable with the fluid coupling member.

11. A cap (22) as claimed in any of the preceding claims, wherein the valve means (28) is an interference fit with the coupling member when in the second, extended position.

12. A cap (22) as claimed in any of the preceding claims, wherein the valve means (28) comprises a valve closure member releasably engageable with the fluid coupling member and wherein the body portion (24) comprises a recess (26) in which the valve closure member is received when in the first, retracted position and, optionally, wherein the valve closure member (28) comprises a resiliently deformable seal means (58)
and, optionally, wherein the resiliently deformable seal means (58) is located around the periphery of the valve closure member (28) and is adapted to be engageable with a cylindrical valve seat (18) on the fluid coupling member and, optionally, wherein the valve closure member (28) on which the resiliently deformable seal means (58) is carried is adapted to be engageable with a second valve seat (60) on the fluid coupling member when the resiliently deformable seal means (58) is in sealing engagement with the fluid coupling member.

13. A cap (22) as claimed in claim 12, comprising an elongate mounting member (40) on which the valve closure member is mounted
and, optionally, wherein the elongate mounting member (40) is displaceable longitudinally and passes through an aperture (46) in the body portion (24) and, optionally, wherein the elongate mounting member (40) is pivotally connected to a displacement member (48), whereby movement of the displacement member causes displacement of the elongate mounting member (40) and the valve closure member
and, optionally, wherein the displacement member is screw-threadedly mounted on the body portion of the cap.

14. The combination of a fluid coupling member (10) and a cap (22) as claimed in any of the preceding claims, wherein the fluid coupling member (10) comprises engagement means (34) which are releasably slidably engageable with the engagement means (30, 32) of the cap and a recess for receipt of the valve means in its second, extended position.

## Patentansprüche

1. Abdeckung (22) für ein Fluidkupplungselement (10), wobei die Abdeckung dazu konfiguriert ist, trennbar schiebbar mit dem Fluidkupplungselement in Eingriff gebracht werden zu können und Folgendes umfasst: einen Körperabschnitt (24), Eingriffsmittel (30, 32), die trennbar schiebbar mit einem Abschnitt (34) des Kupplungselements in Eingriff gebracht werden können und die, wenn im Eingriff, den Körperabschnitt (24) daran hindern, in Bezug auf das Kupplungselement in einer ersten Richtung zu rutschen, und ein Ventilmittel (28), das zwischen einer ersten, eingezogenen Stellung, in der es sich nicht mit dem Kupplungselement im Eingriff befindet und den Eingriff der Eingriffsmittel mit dem Kupplungselement zulässt, und einer zweiten, ausgefahrenen Stellung, in der sich das Ventilmittel im dichtenden Eingriff mit dem Kupplungselement befindet und das Lösen der Eingriffsmittel verhindert, verlagerbar ist, wobei das Ventilmittel (28), wenn in der eingezogenen Stellung, in dem Körperabschnitt (24) der Abdeckung sitzt.

2. Abdeckung (22) nach Anspruch 1, wobei das Lösen der Eingriffsmittel (30, 32) durch Schieben der Abdeckung in einer ersten Richtung bewirkt wird und wobei der Eingriff des Ventilmittels (28) die Abdeckung daran hindert, in der ersten Richtung zu rutschen,
und wobei optional die Richtung, in der die Abdeckung (22) schiebbar ist, um die Eingriffsmittel in Eingriff zu bringen und/oder zu lösen, zu der Richtung schräggestellt ist, in der das Ventilmittel (28) bewegbar ist,
und wobei optional die Richtung, in der die Abdeckung (22) schiebbar ist, um die Eingriffsmittel in Eingriff zu bringen und/oder zu lösen, im Wesentlichen senkrecht zu der Richtung ist, in der das Ventilmittel (28) bewegbar ist.

3. Abdeckung (22) nach einem der vorangehenden Ansprüche, wobei die Abdeckung in Bezug auf die Richtung des Flusses des Fluidkupplungselements (10) in Querrichtung schiebbar ist, um die Eingriffsmittel (30, 32) in Eingriff zu bringen und zu lösen.

4. Abdeckung (22) nach einem der vorangehenden Ansprüche, wobei das Ventilmittel (28) in der Richtung des Fluidflusses durch das Fluidkupplungselement verlagerbar ist.

5. Abdeckung (22) nach einem der vorangehenden Ansprüche, wobei die Abdeckung trennbar über einen Endabschnitt der Fluidkupplung (10) passt und damit in Eingriff gelangt und wobei der Eingriff der Eingriffsmittel (30, 32) die Abdeckung daran hindert, sich in der Axialrichtung der Fluidkupplung zu bewegen.

6. Abdeckung (22) nach einem der vorangehenden Ansprüche, wobei das Eingriffsmittel (30, 32) einen überhängenden Vorsprung (32) umfasst, der dazu angepasst ist, über einem entsprechenden Abschnitt des abzudeckenden Kupplungselements zu sitzen,
und wobei sich optional der überhängende Vorsprung (32) teilweise um den Umfang des Körperabschnitts (24) erstreckt,
und wobei optional der überhängende Vorsprung (32) von der Innenfläche des Körperabschnitts (24) vorsteht.

7. Abdeckung (22) nach Anspruch 6, wobei der überhängende Vorsprung (32) eine bogenförmige Lippe umfasst.

8. Abdeckung (22) nach einem der vorangehenden Ansprüche 6 oder 7, wobei der überhängende Vorsprung (32) ein Nutmittel (33) definiert, das dazu angepasst ist, einen vorstehenden Abschnitt (34) des Fluidkupplungselements aufzunehmen.

9. Abdeckung (22) nach einem der vorangehenden Ansprüche, weiter umfassend ein Mittel (36, 38) zum Verhindern der Drehung der Abdeckung (22) in Bezug auf das Fluidkupplungselement (10), wenn sich die Eingriffsmittel mit dem Fluidkupplungselement im Eingriff befinden,
und optional umfassend einen Vorsprung oder eine Aussparung (38), der bzw. die dazu angepasst ist, in einer Aussparung bzw. einem Vorsprung (36) eines Fluidkupplungselements aufgenommen zu werden.

10. Abdeckung (22) nach einem der vorangehenden Ansprüche, wobei die Abdeckung von Hand mit dem Fluidkupplungselement in Eingriff gebracht und davon gelöst werden kann.

11. Abdeckung (22) nach einem der vorangehenden Ansprüche, wobei das Ventilmittel (28) eine Übermaßpassung mit dem Kupplungselement bildet, wenn es sich in der zweiten, ausgefahrenen Stellung befindet.

12. Abdeckung (22) nach einem der vorangehenden Ansprüche, wobei das Ventilmittel (28) ein Ventilverschlusselement umfasst, das trennbar mit dem Fluidkupplungselement in Eingriff gebracht werden kann, und wobei der Körperabschnitt (24) eine Aussparung (26) umfasst, in der das Ventilverschlusselement aufgenommen ist, wenn es sich in der ersten, eingezogenen Stellung befindet,
und wobei optional das Ventilverschlusselement (28) ein elastisch verformbares Dichtungsmittel (58) umfasst,
und wobei optional das elastisch verformbare Dichtungsmittel (58) um den Umfang des Ventilverschlusselements (28) sitzt und dazu angepasst ist, mit einem zylindrischen Ventilsitz (18) an dem Fluidkupplungselement in Eingriff gebracht zu werden,
und wobei optional das Ventilverschlusselement (28), auf dem das elastisch verformbare Dichtungsmittel (58) gehalten wird, dazu angepasst ist, mit einem zweiten Ventilsitz (60) an dem Fluidkupplungselement in Eingriff gebracht werden zu können, wenn sich das elastisch verformbare Dichtungsmittel (58) in dichtendem Eingriff mit dem Fluidkupplungselement befindet.

13. Abdeckung (22) nach Anspruch 12, umfassend ein langgestrecktes Befestigungselement (40), an dem das Ventilverschlusselement befestigt ist,
und wobei optional das langgestreckte Befestigungselement (40) in Längsrichtung verlagerbar ist und durch eine Öffnung (46) in dem Körperabschnitt (24) gelangt,
und wobei optional das langgestreckte Befestigungselement (40) drehbar mit einem Verlagerungselement (48) verbunden ist, wodurch die Bewegung des Verlagerungselements die Verlagerung des langgestreckten Befestigungselements (40) und des Ventilverschlusselements bewirkt,
und wobei optional das Verlagerungselement mittels Schraubengewinden an dem Körperabschnitt der Abdeckung befestigt ist.

14. Kombination eines Fluidkupplungselements (10) und einer Abdeckung (22) nach einem der vorangehenden Ansprüche, wobei das Fluidkupplungselement (10) Eingriffsmittel (34), die trennbar schiebbar mit dem Eingriffsmittel (30, 32) der Abdeckung in Eingriff gebracht werden können, und eine Aussparung zum Aufnehmen des Ventilmittels in seiner zweiten, ausgefahrenen Stellung, umfasst.

## Revendications

1. Capuchon (22) pour un élément de raccordement fluidique (10), le capuchon étant configuré pour être en mesure de se mettre en prise de manière coulissante et libérable avec l'élément de raccordement fluidique et comportant une partie formant corps (24), un moyen de mise en prise (30, 32) en mesure de se mettre en prise de manière coulissante et libérable avec une partie (34) de l'élément de raccordement qui, quand il es mis en prise, empêche la partie formant corps (24) de coulisser par rapport à l'élément de raccordement dans une première direction et un moyen formant soupape (28) en mesure de se déplacer entre une première position rétractée dans laquelle il n'est pas mis en prise avec l'élément de raccordement et permet la mise en prise du moyen de mise en prise avec l'élément de raccordement et une deuxième position étendue dans laquelle le moyen formant soupape est mis en prise de manière étanche avec l'élément de raccordement et empêche toute séparation du moyen de mise en prise, dans lequel le moyen formant soupape (28) est situé à l'intérieur de la partie formant corps (24) du capuchon quand il est dans la position rétractée.

2. Capuchon (22) selon la revendication 1, dans lequel la séparation du moyen de mise en prise (30, 32) est effectuée en faisant coulisser le capuchon dans une première direction et dans lequel ladite mise en prise du moyen formant soupape (28) empêche le capuchon de coulisser dans ladite première direction,
et, éventuellement, dans lequel la direction dans laquelle le capuchon (22) est en mesure de coulisser à des fins de mise en prise et/ou de séparation du moyen de mise en prise est inclinée par rapport à la direction dans laquelle le moyen formant soupape (28) est en mesure de se déplacer,
et, éventuellement, dans lequel la direction dans laquelle le capuchon (22) est en mesure de coulisser à des fins de mise en prise et/ou de séparation du moyen de mise en prise est sensiblement perpendiculaire par rapport à la direction dans laquelle le moyen formant soupape (28) est en mesure de se déplacer.

3. Capuchon (22) selon l'une quelconque des revendications précédentes, dans lequel le capuchon est en mesure de coulisser de manière latérale par rapport à la direction d'écoulement de l'élément de raccordement fluidique (10) à des fins de mise en prise et de séparation du moyen de mise en prise (30, 32).

4. Capuchon (22) selon l'une quelconque des revendications précédentes, dans lequel le moyen formant soupape (28) est en mesure de se déplacer dans la direction de l'écoulement du fluide au travers de l'élément de raccordement fluidique.

5. Capuchon (22) selon l'une quelconque des revendications précédentes, dans lequel le capuchon s'ajuste de manière libérable sur, et se met en prise avec, une partie d'extrémité du raccord fluidique (10) et dans lequel la mise en prise du moyen de mise en prise (30, 32) empêche le capuchon de se déplacer dans la direction axiale du raccord fluidique.

6. Capuchon (22) selon l'une quelconque des revendications précédentes, dans lequel le moyen de mise en prise (30, 32) comporte une partie saillante en porte-à-faux (32) adaptée pour être située sur une partie correspondante de l'élément de raccordement devant être recouvert,
et, éventuellement, dans lequel la partie saillante en porte-à-faux (32) s'étend partiellement autour de la périphérie de la partie formant corps (24),
et, éventuellement, dans lequel la partie saillante en porte-à-faux (32) fait saillie depuis la face intérieure de la partie formant corps (24).

7. Capuchon (22) selon la revendication 6, dans lequel la partie saillante en porte-à-faux (32) comporte une lèvre arquée.

8. Capuchon (22) selon l'une quelconque des revendications précédentes 6 ou 7, dans lequel la partie saillante en porte-à-faux (32) définit un moyen formant fente (33) adapté pour recevoir une partie faisant saillie (34) de l'élément de raccordement fluidique.

9. Capuchon (22) selon l'une quelconque des revendications précédentes, comportant par ailleurs un moyen (36, 38) servant à empêcher toute rotation du capuchon (22) par rapport à l'élément de raccordement fluidique (10) quand le moyen de mise en prise est mis en prise avec l'élément de raccordement fluidique,
et, éventuellement, comportant une partie saillante, ou un évidement, (38) adaptée pour être reçue dans un évidement, ou une partie saillante, (36) respectivement d'un élément de raccordement fluidique.

10. Capuchon (22) selon l'une quelconque des revendications précédentes, dans lequel le capuchon est en mesure de se mettre en prise et de se séparer de manière manuelle par rapport à l'élément de raccordement fluidique.

11. Capuchon (22) selon l'une quelconque des revendications précédentes, dans lequel le moyen formant soupape (28) est un ajustement avec serrage avec l'élément de raccordement quand il est dans la deuxième position étendue.

12. Capuchon (22) selon l'une quelconque des revendications précédentes, dans lequel le moyen formant soupape (28) comporte un élément de fermeture de soupape en mesure de se mettre en prise de manière libérable avec l'élément de raccordement fluidique et dans lequel la partie formant corps (24) comporte un évidement (26) dans lequel l'élément de fermeture de soupape est reçu quand il est dans la première position rétractée,
et, éventuellement, dans lequel l'élément de fermeture de soupape (28) comporte un moyen d'étanchéité déformable de manière élastique (58),
et, éventuellement, dans lequel le moyen d'étanchéité déformable de manière élastique (58) est situé autour de la périphérie de l'élément de fermeture de soupape (28) et est adapté pour être en mesure de se mettre en prise avec un siège de soupape cylindrique (18) sur l'élément de raccordement fluidique,
et, éventuellement, dans lequel l'élément de fermeture de soupape (28) sur lequel le moyen d'étanchéité déformable de manière élastique (58) est porté est adapté pour être en mesure de se mettre en prise avec un deuxième siège de soupape (60) sur l'élément de raccordement fluidique quand le moyen d'étanchéité déformable de manière élastique (58) est mis en prise de manière étanche avec l'élément de raccordement fluidique.

13. Capuchon (22) selon la revendication 12, comportant un élément de montage allongé (40) sur lequel l'élément de fermeture de soupape est monté,
et, éventuellement, dans lequel l'élément de montage allongé (40) est en mesure de se déplacer dans le sens longitudinal et passe au travers d'une ouverture (46) dans la partie formant corps (24),
et, éventuellement, dans lequel l'élément de montage allongé (40) est raccordé de manière pivotante à un élément de déplacement (48), ce par quoi le mouvement de l'élément de déplacement entraîne le déplacement de l'élément de montage allongé (40) et de l'élément de fermeture de soupape,
et, éventuellement, dans lequel l'élément de déplacement est monté par filetage de vis sur la partie formant corps du capuchon.

14. Combinaison d'un élément de raccordement fluidique (10) et d'un capuchon (22) selon l'une quelconque des revendications précédentes, dans laquelle l'élément de raccordement fluidique (10) comporte des moyens de mise en prise (34) qui sont en mesure de se mettre en prise de manière coulissante et libérable avec le moyen de mise en prise (30, 32) du capuchon et un évidement à des fins de réception du moyen formant soupape dans sa deuxième position étendue.
